**Europäisches Patentamt**

**European Patent Office**

**Office européen des brevets**

(11) Veröffentlichungsnummer: **0 089 611**
**B1**

(12) # EUROPÄISCHE PATENTSCHRIFT

(45) Veröffentlichungstag der Patentschrift:
**10.12.86**

(51) Int. Cl.⁴: **H 04 N 13/00**

(21) Anmeldenummer: **83102581.2**

(22) Anmeldetag: **16.03.83**

(54) **Verfahren und Vorrichtung zum Erzeugen eines räumlich wirkenden Schirmbildes eines Fernsehempfängers.**

(30) Priorität: **19.03.82 DE 3210089**
**08.05.82 DE 3217849**

(43) Veröffentlichungstag der Anmeldung:
**28.09.83 Patentblatt 83/39**

(45) Bekanntmachung des Hinweises auf die Patenterteilung:
**10.12.86 Patentblatt 86/50**

(84) Benannte Vertragsstaaten:
**AT BE CH FR IT LI LU NL SE**

(56) Entgegenhaltungen:
**DE - A - 2 140 944**
**DE - B - 1 164 467**

**Rundfunktechn. Mitt., Band 13, 1969, Heft 3, Seiten 123-124**
**Tagungsband der 10. Jahrgangstagung der FKTG v. 13.-17.9.82 in München, Seiten 432-442**

(73) Patentinhaber: **Hofmann, Hasso, Überseering 9, D-2000 Hamburg 60 (DE)**

(72) Erfinder: **Ganss, Rolf, Mexicoring 7, D-2000 Hamburg 60 (DE)**

(74) Vertreter: **Dipl.-Ing. H. Hauck Dipl.-Phys. W. Schmitz Dipl.-Ing. E. Graalfs Dipl.-Ing. W. Wehnert Dr.-Ing. W. Döring, Neuer Wall 41, D-2000 Hamburg 36 (DE)**

## Beschreibung

Die Erfindung betrifft ein Verfahren zum Erzeugen eines bei der Betrachtung mit einer Anaglyphenbrille räumlich wirkenden Schirmbildes eines Fernsehempfängers aus monoskopischen Bildsignalen, die zeitlich aufeinanderfolgende monoskopische Bilder repräsentieren, durch Überlagerung zweier um einen gewählten Teilbildabstand gegeneinander versetzter Teilbilder in zu der Anaglyphenbrille passenden Komplementärfarben, wobei jedes der Teilbilder in Form eines Farbauszuges aus jeweils dem gleichen monoskopischen Bild abgeleitet wird.

Die Erfindung betrifft ferner eine Vorrichtung zur Durchführung des Verfahrens.

Beim Aussenden herkömmlicher Stereo-Fernsehsendungen (sogenanntes «3D-Fernsehen») werden mit zwei nebeneinander versetzten Kameras echte stereoskopische Teilbilder in den Komplementärfarben Rot und Grün erzeugt und mit einer üblichen Rot-Grün-Anaglyphenbrille als stereoskopisches Schwarzweissbild betrachtet. Bei diesem bekannten Verfahren sind in ausserhalb der Scharfeinstellung liegenden Bildbereichen starke Umschärfen und sehr störende Farbflecken und Farbsäume vorhanden. Es wird nur ein schwarzweisser Bildeindruck erhalten. Der Betrachter ermüdet rasch, besonders bei bewegten Szenen. Der Betrachter möchte deshalb oft die Sendung lieber ohne Anaglyphenbrille sehen; das ist aber nur unter starker Einbusse an Bildqualität möglich, weil ohne Anaglyphenbrille nur ein sehr unscharfer Bildeindruck möglich ist.

Bei allen echten stereoskopischen Verfahren ist der Aufwand für die Herstellung der Sendungen beträchtlich. Bereits vorliegende monoskopische Aufnahmen sind nur als solche betrachtbar.

Bei einem anderen bekannten Verfahren der Wiedergabe von Fernsehbildern (US-PS 4 264 926), das auch auf bereits vorliegende monoskopische Bilder anwendbar ist, versucht man, eine Verschiedenheit mit zeitlichem Abstand nacheinander aufgenommener monoskopischer Bilder einer bewegten Szene zur Gewinnung eines Raumbildeindrucks auszunutzen.

Die Speicherung des vorausgegangenen Bildes erfordert jedoch einen sehr beträchtlichen Aufwand. Das Ergebnis ist unbefriedigend, weil der gewünschte Erfolg nur dann eintreten kann, wenn sich die bewegten Elemente der Szene mit einer bestimmten Geschwindigkeit in einer bestimmten Horizontalrichtung (bei normaler Haltung des Kopfes des Betrachters) bewegen.

Es ist ferner seit längerer Zeit bekannt, dass man einen räumlichen Bildeindruck auch mit Teilbildern erzielen kann, die von dem gleichen monoskopischen Bild abgeleitet sind. Dieses Prinzip ist nicht nur für rein optische Einrichtungen (BE-PS 535 959), sondern auch für Fernsehempfänger beschrieben worden. Nach der US-PS 4 151 549 wird ein Projektions-Farbfernsehempfänger verwendet, der drei Projektoren aufweist, je einen für drei Grundfarben. Es sind nicht näher beschriebene Mittel vorgesehen, um wahlweise eines der erzeugten Projektions-Teilbilder gegenüber den anderen Teilbildern zu versetzen. Die gegeneinander versetzten Teilbilder werden über Polarisationsfilter getrennt betrachtet. Dieses Verfahren ist sehr aufwendig und nicht für die weit überwiegend benutzten Empfangsgeräte geeignet, die ohne Projektionseinrichtung oder mit nur einem Projektor arbeiten.

Ähnlich arbeitet ein bekanntes Verfahren der eingangs angegebenen Art (DE-AS 1 164 467). Dabei werden zwei in Komplementärfarben schreibende Strahlerzeugungssysteme einer Zweistrahl-Bildröhre mit demselben Schwarzweiss-Bildsignal gesteuert, und die von den beiden Strahlen erzeugten Teilbilder werden mit Hilfe einer nicht näher beschriebenen Regeleinrichtung seitlich gegeneinander versetzt. Dieser Vorschlag fand keine Beachtung in der Praxis, wahrscheinlich deshalb, weil die gegenseitige Verschiebung der Teilbilder Schwierigkeiten bereitete. Von diesem Teil des bekannten Verfahrens geht die vorliegende Erfindung aus. Das bekannte Verfahren verwendet jedoch zusätzlich noch eine nichtlineare gegensinnige Verzerrung der Zeitablenkungen der beiden Strahlen, um die beiden Teilbilder perspektivisch verschieden zu machen und so den Raumbildeindruck zu verstärken. Da jedoch die dadurch hervorgerufene zusätzliche Stereowirkung allenfalls zufällig hin und wieder mit der tatsächlichen Perspektive der abgebildeten Szene übereinstimmen kann, kann auf diese Weise ein zufriedenstellender Raumbildeindruck nicht entstehen. Es zeigt sich an diesem zusätzlichen Merkmal aber die Überzeugung, dass angesichts der unbefriedigenden Wirksamkeit der eingangs erwähnten echten stereoskopischen Fernsehverfahren der Gedanke abwegig erscheinen musste, einfach ein pseudostereoskopisches Verfahren zu verwenden, von dem wohl eine weitere Herabsetzung des Standards zu erwarten war.

Die Erfindung geht von der Aufgabe aus, ein Verfahren und eine Vorrichtung zum Herstellen eines bei der Betrachtung mit einer Anaglyphenbrille räumlich wirkenden Schirmbildes eines Fernsehempfängers zu schaffen, die ebenfalls auf bereits vorhandene monoskopische Aufnahmen anwendbar sind, nur einen sehr geringen Aufwand erfordern und dennoch einen räumlichen Bildeindruck hoher Qualität vermitteln.

Zur Lösung dieser Aufgabe geht die Erfindung aus von dem zuletzt beschriebenen Verfahren der eingangs angegebenen Art.

Nach der Erfindung wird die Aufgabe bezüglich des Verfahrens gelöst mit einem Verfahren der eingangs angegebenen Art, das dadurch gekennzeichnet ist, dass der Teilbildabstand durch zeitliche Verzögerung der die zusammengehörenden Teilbilder erzeugenden Teilbildsignale gegeneinander gebildet wird. Bei dem erfindungsgemässen Verfahren wird der gegenseitige seitliche Versatz der Teilbilder sehr einfach durch zeitliche Verzögerung von Teilbildsignalen erzeugt. Dies kann mit einfachen Mitteln und mit geringstem Aufwand erzielt werden, und zwar auch leicht nachträglich an bereits vorhandenen Einrichtungen. Es bedarf weder der Speicherung und Verarbeitung eines ganzen Bildinhalts noch einer Veränderung der Ablenkgeometrie der die Teilbilder schreibenden Strahlen. Auch kann mit einfachen Mitteln ein Umschalten zwischen Betrieb mit und ohne Anwendung des erfindungsgemässen Verfahrens erzielt werden. Eine solche Umschaltbarkeit ist sehr zweckmässig, damit das Schirmbild gewünschtenfalls auch ohne Anaglyphenbrille (und ohne Raumbildeindruck) betrachtet werden kann.

Da bei dem erfindungsgemässen Verfahren grundsätzlich von einem monoskopischen Bild bzw. einem monoskopischen Bildsignal ausgegangen wird, sind keinerlei Stereo-Aufnahmeeinrichtungen erforderlich, und eine Anwendung bei bereits vorhandenen monoskopischen Aufnahmen ist ohne weiteres möglich. Es können alle monoskopischen Quellen von Bild-Informationen verwendet werden, also insbesondere auch beispielsweise übliche monoskopische Fernsehkameras, wie auch bereits vorhandene monoskopische Bildaufzeichnungen wie fotografische Filme, Videoaufzeichnungen, Aufsicht- und Durchsichtbilder usw. Eine zusätzliche Vorbereitung oder Vorverarbeitung solcher Aufzeichnungen ist nicht erforderlich. Dies stellt einen ganz wesentlichen Vorteil des erfindungsgemässen Verfahrens dar.

Besonders einfach ist eine bevorzugte Ausführungsform, nach welcher zur Erzeugung des Schirmbildes eine in der üblichen Weise betriebene Dreistrahl-Farbbildröhre verwendet wird, die mit einem Satz von in dem Bildsignal enthaltenen Grundfarbensignalen gesteuert wird, und zur Bildung der Teilbildsignale der Satz der drei Grundfarbensignale in zwei entsprechend dem gewählten Teilbildabstand zeitlich gegeneinander verzögerte Teilsätze von Grundfarbensignalen aufgeteilt wird. Die Aufteilung des Satzes der Grundfarbensignale und die zeitliche Verzögerung sind elektrisch mit sehr einfachen Mitteln erzielbar, da es sich nur um die Verarbeitung und Verzögerung von Signalzügen handelt. Im Vergleich zu herkömmlichen Farbfernsehgeräten sind nur wenige geringfügige Änderungen erforderlich, die keine komplizierten Schaltmittel benötigen und auch an bereits vorhandenen Farbfernsehgeräten ohne Schwierigkeiten leicht ausgeführt werden können.

Im allgemeinen wird man bei dem erfindungsgemässen Verfahren mit zwei Teilbildsignalen auskommen, da diese grundsätzlich zur Erzeugung eines echten räumlichen Bildeindrucks ausreichen und erforderlich sind. Es ist aber auch möglich, zur Erzielung besonderer Effekte, wie zum Beispiel farbiger Schatten, mehr als zwei Teilbildsignale zu bilden und zu verarbeiten.

Besonders vorteilhaft ist es, wenn der Satz der Grundfarbensignale derart aufgeteilt und eine entsprechend ausgelegte Anaglyphenbrille verwendet wird, dass die Teilbilder sich beim Betrachten zu einem Bild in im wesentlichen den ursprünglichen Farben zusammensetzen. Diese vorteilhafte Wirkung kann in einfacher Weise dadurch erzielt werden, dass die Aufteilung des Satzes der Grundfarbensignale passend zu einer Anaglyphenbrille vorgenommen wird, bei der die von den beiden Filterscheiben der Brille durchgelassenen Licht-Spektralbereiche sich möglichst wenig überlappen und zusammen möglichst das ganze sichtbare Spektrum umfassen. Besonders zweckmässig ist dabei die Aufteilung passend zu einer Anaglyphenbrille, bei der die eine Filterscheibe einen mittleren Bereich des Spektrums, im wesentlichen Gelb, Grün und Blau, und die andere Filterscheibe die Randbereiche des sichtbaren Spektrums, im wesentlichen Rot, Orange, Violett und Purpur, durchlässt. Bei dieser Aufteilung ergibt sich eine besonders gute Wiederherstellung des ursprünglichen Farbeindrucks. Wenn sich die Durchlassbereiche der Filterscheiben überlappen, kann der Betrachter leichter ermüden. Nach heutiger Technik stehen Filterscheiben zur Verfügung, die scharf getrennte breite Durchlassbereiche haben.

Die bunte Wiedergabe im wesentlichen in den natürlichen Farben trägt erheblich dazu bei, dass mit dem erfindungsgemässen Verfahren überraschenderweise Schirmbilder erzeugt werden können, die einen überzeugenden räumlichen Bildeindruck hoher Qualität vermitteln, und zwar auch dann, wenn perspektivisch gleiche Teilbilder verwendet werden, also keinerlei Aufwand zur künstlichen Erzeugung einer perspektivischen Ungleichheit der Teilbilder erforderlich ist. Insbesondere erhält der Betrachter auch einen richtigen Eindruck von der Verteilung der Elemente der Szene in der Tiefe. Diese überraschende Tatsache könnte nach derzeitiger Erkenntnis darauf zurückzuführen sein, dass bei der Betrachtung auch Erfahrungswissen unwillkürlich mit verarbeitet wird, beispielsweise über die scheinbaren Grössen von Objekten bei Anordnung in verschiedenen Tiefen der Szene. Daraus könnte sich auch erklären, dass bei dem erfindungsgemässen Verfahren der räumliche Eindruck auch bei unbewegten Szenen deutlich und richtig ist. Dieses vorteilhafte Hinzutreten unwillkürlicher psychophysiologischer Einflüsse wird stark begünstigt, wenn man die Teilbilder so der Anaglyphenbrille zuordnet, dass für den Betrachter der Eindruck eines jenseits des Schirms liegenden Bildes entsteht. Der Betrachter vermeint dann in einen von dem Rand des Schirms begrenzten Raum zu blicken, in dem sich die Elemente der Szene mit natürlichem Tiefeneindruck anordnen. Im umgekehrten Fall, also bei einer Zuordnung, bei der das Bild scheinbar vor dem Schirm läge, können die erwähnten unwillkürlichen Einflüsse sich nicht voll auswirken, wahrscheinlich deshalb, weil normalerweise ein Betrachter keine ins Gewicht fallenden Erfahrungen mit freischwebenden Bildern hat.

Die nach dem erfindungsgemässen Verfahren hergestellten Schirmbilder sind bei der Betrachtung überall von im wesentlichen gleicher Qualität wie entsprechende monoskopische Bilder. Insbesondere können auch unscharfe Bildbereiche mit natürlichem Eindruck und ohne das Auftreten störender Farbsäume betrachtet werden. Bewegte Bildelemente werden unabhängig von ihrer Geschwindigkeit ebenso gut wie bei monoskopischer Betrachtung empfunden, also insbesondere auch ohne störende Farbsäume.

Die gegenseitige Abstimmung der Aufteilung der Grundfarbensignale und der Durchlasscharakteristik der Filterscheiben der Anaglyphenbrille ist leicht möglich, weil man gewählte Anteile der Grundfarbensignale leicht elektrisch bilden und mischen kann. Besonders dabei wirkt es sich günstig aus, dass der seitliche Versatz der Teilbilder durch elektronische Verzögerung in einer Signalleitung bewirkt werden kann, also ein Speichern eines ganzen vorausgegangenen Bildes nicht erforderlich ist.

Mit den bei üblichen Fernsehsystemen verwendeten Grundfarben kann die Aufteilung des Satzes der Grundfarbensignale einfach so erfolgen, dass ein erster Teilsatz in Form eines der Grundfarbensignale und ein zweiter Teilsatz in Form der beiden anderen Grundfarbensignale gebildet wird. Eine Unterteilung der einzelnen Grundfarbensignale ist dann nicht erforderlich. Zweckmässigerweise wird bei üblicher Norm entsprechenden Grundfarbensignalen für Rot, Grün und Blau der erste Teilsatz aus dem Grundfarbensignal für Rot und der zweite Teilsatz aus den Grundfarbensignalen für Grün und Blau gebildet. Diese beiden Teilsätze sind weitgehend einander farbkomplementär, so dass damit besonders leicht eine gute Wiederherstellung der ursprünglichen Farben des monoskopischen Bildes im räumlichen Bildeindruck erzielbar ist.

Eine weitere Vereinfachung ergibt sich daraus, dass man einen der Teilsätze unverzögert lässt. Man braucht dann Verzögerungsmittel nur in dem anderen Teilsatz vorzusehen. Bei dem erwähnten Fall, dass der erste Teilsatz Rot und der zweite Teilsatz Grün und Blau entspricht, wird zweckmässigerweise der Teilsatz für Rot unverzögert gelassen, weil dann die Teilbilder im gleichen Sinn gegeneinander versetzt sind wie die roten und grünen Teilbilder bei dem herkömmlichen 3D-Fernsehen. Man kann dann die für das vorliegende Verfahren benutzte Anaglyphenbrille auch für die Betrachtung herkömmlicher 3D-Fernsehsendungen verwenden. Grundsätzlich ist aber natürlich auch die umgekehrte Arbeitsweise möglich, nach welcher für die Grundfarben Rot, Grün, Blau der Rot-Signalweg mit Verzögerungsmitteln versehen ist. Dann ist der Aufwand an Schaltmitteln nur halb so gross, doch sind bei der Anaglyphenbrille im Vergleich zu dem bisherigen 3D-Fernsehen die Filterscheiben vertauscht.

Die Teilbildsignale können an beliebiger Stelle im Verlauf der Verarbeitung der ursprünglichen Bildinformation hergestellt werden, so insbesondere schon senderseitig. Dadurch erhält man den wichtigen Vorteil, dass keine Veränderung am Farbfernsehempfänger erforderlich ist. Die Teilbildsignale können auch in einer Fernsehkamera erzeugt werden. Da in Fernsehkameras ganz ähnlich wie in einem Farbfernsehempfänger eine Bildfläche (eines Primärbildes) zeilenweise abgetastet wird und die erhaltenen Bildsignale in Grundfarbensignale zerlegt werden, sind grundsätzlich ähnliche Schaltungen verwendbar wie bei Durchführung des erfindungsgemässen Verfahrens an anderen Stellen eines Signalverarbeitungsweges.

Vorteilhaft kann auch die Erzeugung der Teilbildsignale in einer Übertragungsstrecke sein, also zum Beispiel in einem Umsetzer, einer Relaisstation und dergleichen. Dadurch kann man gezielt nur bestimmte Teile eines räumlichen Sendegebiets mit erfindungsgemäss verarbeiteten Sendungen versorgen.

Im allgemeinen wird es besonders vorteilhaft sein, wenn man die Teilbildsignale empfängerseitig erzeugt. Die dafür erforderlichen Modifikationen in der Schaltung des Empfängers sind geringfügig. Es ist ohne weiteres möglich, Schaltmittel zum wahlweisen Ein- und Ausschalten des erfindungsgemässen Verfahrens vorzusehen, so dass es dann dem Betrachter freigestellt ist, ob er übliche monoskopische Bilder ohne Anaglyphenbrille oder räumlich wirkende Bilder nach dem erfindungsgemässen Verfahren mit Anaglyphenbrille sehen möchte.

Man kann das erfindungsgemässe Verfahren auch bei Bildaufzeichnungs- und -wiedergabegeräten anwenden. Dabei können die Teilbildsignale leicht aus ein und denselben monoskopischen Bildsignalen bei deren Einspeisen in einen Speicher oder beim Abspielen eines monoskopischen Bildsignals aus einem Bildspeicher erzeugt werden. Der dafür erforderliche Aufwand ist gering. Eine Speicherung und zusätzliche Verarbeitung eines zeitlich zurückliegenden Bildinhalts ist nicht erforderlich.

Grundsätzlich kann man erfindungsgemässe Teilbildsignale auch aus zwei gleichen monoskopischen Aufzeichnungen zusammensetzen, weil man beim Abspielen leicht einen bestimmten zeitlichen Versatz in der Signalwiedergabe einstellen kann.

Zur Durchführung des Verfahrens dient nach der Erfindung eine Vorrichtung mit Einrichtungen zum Verarbeiten von monoskopischen Bildsignalen, die als Bild auf einem Bildschirm darstellbar sind, und Mitteln zu zumindest wahlweisem Herstellen des Bildes in Form zweier um einen gewählten Teilbildabstand nebeneinander versetzter Teilbilder, die komplementäre Farbauszüge des monoskopischen Bildes darstellen; diese Vorrichtung ist dadurch gekennzeichnet, dass in einer an sich bekannten Schaltung, in welcher ein Satz von drei Grundfarben-Signalwegen für je ein Grundfarbensignal vorhanden ist, in einem ersten Teilsatz der Signalwege Verzögerungsmittel vorgesehen sind, die das betreffende Grundfarbensignal um den Teilbildabstand zeitlich verzögern. Die Verzögerungsmittel erfordern nur einen sehr geringen baulichen Aufwand und können leicht so gestaltet werden, dass die Verzögerungszeit einstellbar und/oder die Verzögerungseinrichtung als Ganzes abschaltbar ist.

Im allgemeinen ist bei üblichen Farbfernsehempfängern mit Schirmbild-Breiten im Bereich von etwa 25 bis 50 cm ein seitlicher Versatz der Teilbilder um etwa 1 cm zweckmässig. Merkliche Effekte können aber auch mit kleineren und grösseren Verschiebungen erzielt werden, etwa im Bereich von 7 bis 1980 Nanosekunden, entsprechend einem Versatz, je nach Breite des Bildschirms, zwischen einem Zehntel mm bis 1,5 cm. In Sonderfällen kann der Versatz bis zu etwa 10 cm betragen.

Die Erfindung wird im folgenden anhand von Ausführungsbeispielen in Verbindung mit den Zeichnungen näher beschrieben.

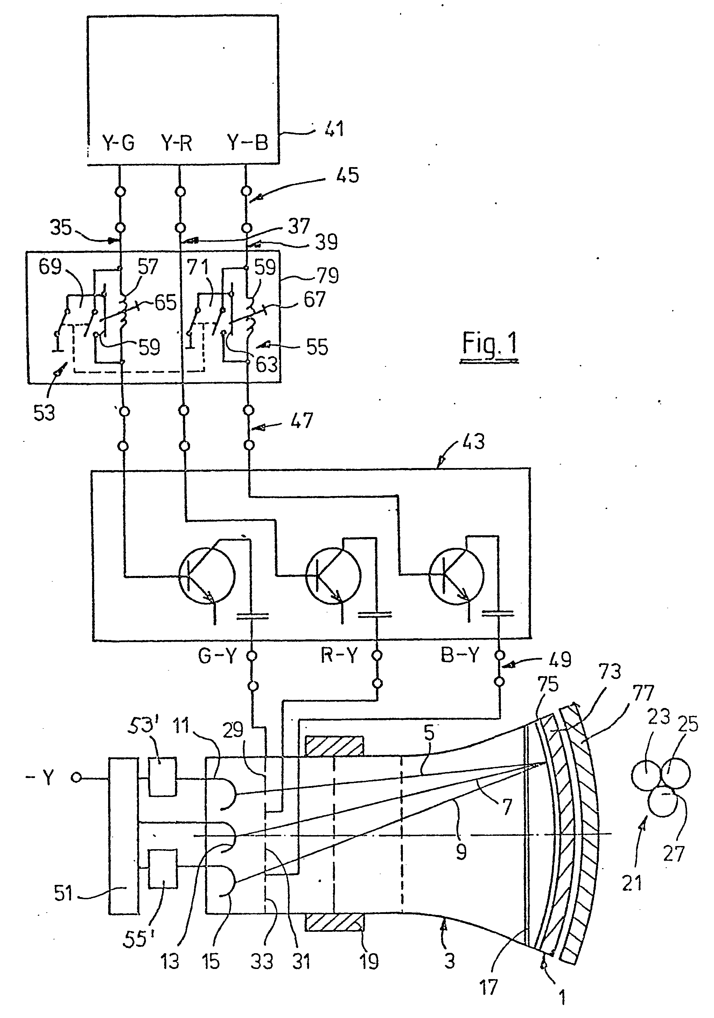

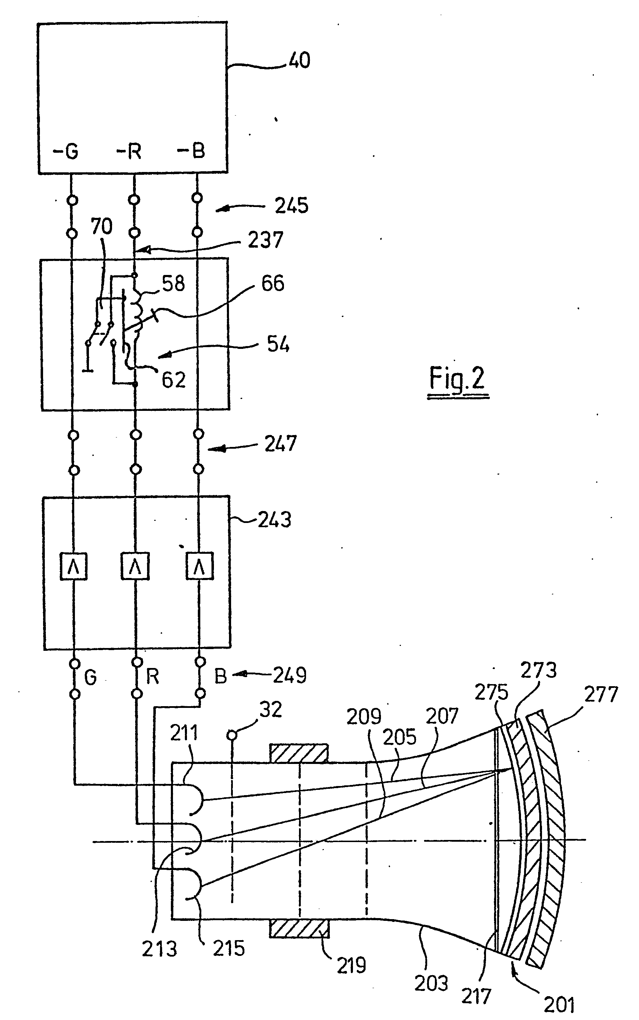

Figuren 1 und 2 zeigen schematisch jeweils einen Teil einer Schaltung eines Farbfernsehempfängers mit erfindungsgemässer Ausrüstung.

Fig. 1 zeigt schematisch einen Ausschnitt aus einem Farbfernsehempfänger, in welchem in der üblichen Weise zur Erzeugung des Schirmbildes ein Bildschirm 1 einer Farbfernsehröhre 3 mit einem Satz von steuerbaren Elektronenstrahlen 5, 7, 9 abgetastet wird, die von Kathoden 11 bzw. 13 bzw. 15 ausgehen. Die Strahlen werden in der üblichen Weise mittels einer Lochmaske 17 und Konvergenzeinrichtungen 19 zu auf dem Bildschirm 1 regelmässig verteilten Bildpunkten hin konvergiert. In Figur 1 ist rechts neben dem Bildschirm 1 ein derartiger Bildpunkt 21 vergrössert dargestellt. Die Strahlen werden so konvergiert, dass sie in den Bildpunkten 21 jeweils auf darin in einem Muster angeordnete und den Strahlen zugewandte Grundfarbenpunkte 23, 25, 27 treffen. Diese fluoreszieren grün (23), rot (25) und blau (27). Die Einrichtungen zur Strahlablenkung sind nicht dargestellt. Jeder Strahl wird in der üblichen Weise mit einem zugeordneten Grundfarbensignal gesteuert, und zwar bei der dargestellten Ausführungsform mittels der Steuergitter 29 bzw. 31 bzw. 33. Zur Steuerung der Bildröhre 1 ist eine Schaltung vorgesehen, in der ein Satz von Grundfarben-Signalwegen 35, 37, 39 für je ein Grundfarbensignal vorhanden ist. Die Steuergitter erhalten Steuerspannungen aus einem Farbartverstärker 41 über eine Umkehrstufe 43. Zwischen dem Farbartverstärker 41, der Umkehrstufe 43 und der Bildröhre 3 sind Steckverbindungen 45 bzw. 47 bzw. 49 vorgesehen. Die Kathoden 11, 13, 15 werden in bekannter Weise über eine Graukorrektur-Matrix 51 von einem Video-Signal (Luminanzsignal) –Y gesteuert, das aus einem nicht dargestellten Videoverstärker geliefert wird. Die Steuergitter erhalten Steuerspannungen in Form von Farbdifferenzsignalen (Chrominanzsignalen) G–Y bzw. R–Y bzw. B–Y, wobei G, B und R primäre Farbsignale für Grün, Rot und Blau sind. Bei dem dargestellten Ausführungsbeispiel werden in bekannter Weise die Grundfarbensignale mit Farbdifferenzsignalen dargestellt. An der Bildröhre sind die primären Farbsignale G, R, B als Intensitäts-Steuersignale für die Elektronenstrahlen wirksam und für die Leuchtdichte der Grundfarben auf dem Bildschirm bestimmend. Insoweit ist der Farbfernsehempfänger in bekannter Weise aufgebaut. Man erkennt ohne weiteres, dass die Erfindung auch anwendbar ist, wenn man als Grundfarbensignale primäre Farbsignale verwendet und die Bildröhre direkt mit diesen steuert.

Bei dem dargestellten Ausführungsbeispiel sind Verzögerungsmittel 53, 55 in den Signalwegen 35 für das grüne Farbdifferenzsignal und 39 für das blaue Farbdifferenzsignal vorgesehen, die diese Signale um den gewählten Teilbildabstand zeitlich verzögern. Es versteht sich, dass bei der in Fig. 1 dargestellten Steuerung der Bildröhre mit Farbdifferenzsignalen auch die den Kathoden zugeführten Anteile der Grundfarbensignale in der gleichen Weise zu verzögern sind wie die den Gittern zugeführten Signalanteile. Das ist in Fig. 1 durch die Symbole 53' und 55' angedeutet.

Es sind Verzögerungsmittel beliebiger Art verwendbar. Bei der dargestellten Ausführungsform wird jeweils eine Induktivität 57 bzw. 59 mit einer gegen eine Abschirmung gebildeten verteilten Kapazität 61 bzw. 63 vorgesehen. Es sind Stellmittel 65 bzw. 67 zum Verändern der Verzögerungszeit vorgesehen. Wenn man – wie beschrieben – den verzögerten Teilsatz aus mehreren Grundfarbensignalen bildet, ist es normalerweise am zweckmässigsten, die Verzögerungsmittel für gleiche Verzögerungszeiten auszulegen. Das ist bei der dargestellten Ausführungsform dadurch erreicht, dass die Stellmittel 65, 67 miteinander gekoppelt sind. Es kann aber in Sonderfällen, z.B. bei einem Teilsatz für mehrere Grundfarben mit stark verschiedenen physiologischen Ansprechzeiten, zweckmässig sein, die Verzögerungszeiten etwas voneinander verschieden zu machen. Das ist ohne weiteres möglich. In der Praxis wird man meist ohne die Stellmittel für die Verzögerungszeit auskommen können. Die Verzögerungsmittel können durch miteinander gekoppelte Ausschaltmittel wahlweise unwirksam gemacht werden. In Fig. 1 sind solche Ausschaltmittel 69, 71 bei den Verzögerungsmitteln 53, 55 dargestellt. Durch Betätigen der Ausschaltmittel kann der Betrachter jederzeit auf Arbeitsweise ohne Teilbild-Zerlegung umschalten und dann entweder monoskopische Sendungen ohne Anaglyphenbrille oder herkömmliche 3D-Sendungen mit Anaglyphenbrille betrachten. Diese Möglichkeiten sind für die Praxis sehr wertvoll. Ausserordentlich bedeutungsvoll ist der Vorteil, dass jede beliebige monoskopische Sendung wahlweise raumbildhaft mit Anaglyphenbrille und Teilbild-Erzeugung oder monoskopisch in der bisherigen Weise ohne Teilbild-Erzeugung und ohne Anaglyphenbrille betrachtet werden kann.

Bei der dargestellten Ausführungsform bestehen die Abschaltmittel aus je einem Doppelschalter, der die Induktivität kurzschliesst und die verteilte Kapazität von Masse löst. Damit zwischen den Betriebsarten mit und ohne Teilbild-Erzeugung keine das Betrachten störenden Unterschiede auftreten, kann es zweckmässig sein, die Abschaltmittel mit Mitteln zum Erniedrigen der Bildhelligkeit und/oder der Farbsättigung und/oder des Kontrasts zu koppeln. Derartige Ausführungsformen sind vom Fachmann ohne weiteres herstellbar und sind deshalb hier nicht näher erläutert.

Der Bildschirm 1 hat wie üblich eine verhältnismässig dicke Glasschicht 73 vor einer bilderzeugenden Fluoreszenzschicht 75. Es hat sich gezeigt, dass die Glasschicht die Wirksamkeit des Verfahrens erheblich verbessert, besonders, wenn sie gewölbt ist, etwa in der bei Fernsehbildröhren üblichen Weise. Auch eine Glas-Dickenverteilung wie bei einer optischen Linse, insbesondere einer Sammellinse, kann sich auf die Bildqualität günstig auswirken. Um diesen Effekt noch besser ausnutzen zu können, kann es vorteilhaft sein, wenigstens eine durchsichtige Scheibe 77 zusätzlich in dem Betrachtungs-Strahlengang anzuordnen. In Fig. 1 ist eine solche Scheibe 77 unmittelbar vor dem Bildschirm dargestellt. Es ist an sich bekannt, dass ein Raumbildeindruck entstehen kann, wenn zwischen einem zweidimensionalen Bild und dem Betrachter zwei in zwei zueinander senkrecht stehenden Richtungen verzerrende optische Elemente angeordnet sind (DE-PS 1 168 761).

Fig. 2 zeigt ein Beispiel für eine Schaltung, in welcher die Bildröhre direkt mit primären Farbsignalen R (Rot), G (Grün) und B (Blau) gesteuert wird. Für Teile, die analog in Fig. 1 vorkommen, werden die gleichen Bezugszeichen wie dort verwendet, jedoch unter Voranstellung der Ziffer 2, so dass insoweit auch auf die vorstehende Beschreibung zu Fig. 1 Bezug genommen wird.

Nach Fig. 2 wird in einer Farbbildröhre 203 ein Satz von steuerbaren Elektronenstrahlen 205, 207, 209, die von je einer Kathode 211 bzw. 213 bzw. 215 ausgehen, mit je einem zugeordneten Grundfarbensignal gesteuert. Als Grundfarbensignale werden hier die primären Farbsignale G (Grün), R (Rot) und B (Blau) verwendet, die den Kathoden 211 bzw. 213 bzw. 215 zugeführt werden. Ein in der Farbbildröhre 203 vorgesehenes Steuergitter 32 wirkt auf alle drei Elektronenstrahlen und dient insbesondere der Arbeitspunkt-Einstellung und der Dunkeltastung. Die Kathoden 211, 213, 215 erhalten die als Steuerspannungen dienenden primären Farbsignale aus einer Matrixschaltung 40 über Umkehrstufen 243. Zwischen der Matrixschaltung 40, den Umkehrstufen 243 und der Bildröhre 203 sind Steckverbindungen 245 bzw. 247 bzw. 249 vorgesehen.

Es sind Verzögerungsmittel 54 in dem Signalweg 237 für das rote Grundfarbensignal (primäre Farbsignal) vorgesehen, die dieses Grundfarbensignal um den gewählten Teilbildabstand zeitlich verzögern. Die Verzögerungsmittel 54 enthalten eine Induktivität 58 mit verteilter Kapazität 62. Es sind Stellmittel 66 zum Verändern der Verzögerungszeit vorgesehen. Die Verzögerungsmittel 54 können durch Ausschaltmittel 70 wahlweise unwirksam gemacht werden. Bei der dargestellten Ausführungsform bestehen die Ausschaltmittel 70 aus einem Doppelschalter, der die Induktivität 58 kurzschliesst und die verteilte Kapazität 62 von Masse löst.

Ganz besondere Vorteile ergeben sich, wenn man das Schirmbild auf einem Träger fixiert. Man erhält dann ein dauerhaftes Bild, das jederzeit mit der Anaglyphenbrille mit räumlichem Eindruck betrachtet werden kann. Am einfachsten wird ein Träger mit einer fotografischen Farbfilmemulsion verwendet und das Schirmbild auf den Träger abfotografiert. Dabei kann man auf dem Träger ein Durchsichtbild oder ein Aufsichtbild herstellen. Auf diese Weise können beliebige, insbesondere auch bereits vorhandene, monoskopische Vorlagen (Bilder, Szenen und dergleichen) mit geringstem Aufwand in Anaglyphenbilder umgewandelt werden. Im einfachsten Fall stellt man dabei das Schirmbild als Abbildung der monoskopischen Vorlage her. Das kann besonders bequem dadurch geschehen, dass man die Vorlage mit einer Fernsehkamera auf dem Bildschirm eines Farbfernsehempfängers wiedergibt.

Man erkennt aus der vorstehenden Beschreibung, dass Verzögerungsmittel an beliebiger Stelle in den Grundfarben-Signalwegen angeordnet werden können, wobei natürlich Stellen vorzuziehen sind, wo die Spannungen und Ströme gering sind, weil dann die Bauteile der Verzögerungseinrichtungen entsprechend klein gehalten werden können. So sind bei der in der Figur 1 dargestellten Ausführungsform die Verzögerungseinrichtungen 53 und 55 zwischen dem Farbartverstärker 41 und der als Leistungsverstärker arbeitenden Umkehrstufe 43, also im Eingang dieser Leistungsstufe, angeordnet. Da zwischen dem Farbartverstärker 41 une der Leistungsstufe 43 normalerweise eine Steckverbindung vorgesehen ist, kann man die Verzögerungseinrichtung als zwischenschaltbaren Steckbaustein 79 ausbilden. Die Verzögerungseinrichtung könnte beispielsweise auch im Ausgang der Umkehrstufe 43 vorgesehen werden, z.B. in der dort vorgesehenen Steckverbindung 49. Dort sind jedoch die Betriebsspannungen höher als im Eingang der Umkehrstufe.

Man erkennt ferner, dass es auch keine Schwierigkeiten bereitet, in den Verzögerungseinrichtungen oder an anderer Stelle Mittel ( z.B. Verstärker) vorzusehen, durch die die Intensitäten der Grundfarbsignale relativ zueinander verstellt werden; das kann zweckmässig sein, um eine möglichst vollständige Komplementarität zu erzielen, auch einschliesslich der Anaglyphenbrille. Dadurch können auch etwaige Signal-Abschwächungen, die in den Verzögerungseinrichtungen eintreten, wieder ausgeglichen werden.

Ferner ist ohne weiteres zu erkennen, dass die beschriebenen Massnahmen unabhängig von der jeweils verwendeten Fernsehnorm anwendbar sind; die beschriebenen Massnahmen können somit insbesondere gleichermassen beim NTSC-, PAL- oder SECAM-System angewandt werden. Da die beschriebene Farbzerlegung auch bei der Übertragung von Schwarz-Weiss-Bildern in Farbfernsehgeräten erfolgt, können die beschriebenen Massnahmen mit gleichem Erfolg auch bei Schwarz-Weiss-Sendungen angewandt werden; in diesem Fall werden durch die Anaglyphenbrille bei den Betrachtern die komplementärfarbenen Teilbilder zum räumlich wirkenden Schwarz-Weiss-Bild zusammengefügt.

**Patentansprüche**

1. Verfahren zum Erzeugen eines bei der Betrachtung mit einer Anaglyphenbrille räumlich wirkenden Schirmbildes eines Fernsehempfängers aus monoskopischen Bildsignalen, die zeitlich aufeinanderfolgende monoskopische Bilder repräsentieren, durch Überlagerung zweier um einen gewählten Teilbildabstand gegeneinander versetzter Teilbilder in zu der Anaglyphenbrille passenden Komplementärfarben, wobei jedes der Teilbilder in Form eines Farbauszuges aus jeweils dem gleichen monoskopischen Bild abgeleitet wird, dadurch gekennzeichnet, dass der Teilbildabstand durch zeitliche Verzögerung der die zusammengehörenden Teilbilder erzeugenden Teilbildsignale gegeneinander gebildet wird.

2. Verfahren nach Anspruch 1, dadurch gekennzeichnet, dass zur Erzeugung des Schirmbildes eine in der üblichen Weise betriebene Dreistrahl-Farbbildröhre verwendet wird, die mit einem Satz von in dem Bildsignal enthaltenen Grundfarbensignalen gesteuert wird, und dass zur Bildung der Teilbildsignale der Satz der drei Grundfarbensignale in zwei entsprechend dem gewählten Teilbildabstand zeitlich gegeneinander verzögerte Teilsätze von Grundfarbensignalen aufgeteilt wird.

3. Verfahren nach Anspruch 2, dadurch gekennzeichnet, dass der Satz der Grundfarbensignale derart aufgeteilt und eine entsprechend derart ausgelegte Anaglyphenbrille verwendet wird, dass die Teilbilder sich beim Betrachten zu einem Bild im wesentlichen in den ursprünglichen Farben zusammensetzen, wobei die Aufteilung des Satzes der Grundfarbensignale passend zu einer Anaglyphenbrille vorgenommen wird, bei der die von den beiden Filterscheiben der Brille durchgelassenen Licht-Spektralbereiche sich möglichst wenig überlappen und zusammen möglichst das ganze sichtbare Spektrum umfassen.

4. Verfahren nach Anspruch 2 oder 3, dadurch gekennzeichnet, dass ein erster Teilsatz in Form eines der Grundfarbensignale und ein zweiter Teilsatz in Form der beiden anderen Grundfarbensignale gebildet wird.

5. Verfahren nach Anspruch 4, dadurch gekennzeichnet, dass einer der Teilsätze unverzögert gelassen wird.

6. Verfahren nach einem der Ansprüche 2 bis 5, dadurch gekennzeichnet, dass zur Erzielung möglichst vollständiger Komplementarität die Intensitäten der Grundfarbensignale relativ zueinander verstellt werden.

7. Verfahren nach einem der vorhergehenden Ansprüche, dadurch gekennzeichnet, dass das Schirmbild auf einem Träger fixiert wird.

8. Vorrichtung zur Durchführung des Verfahrens nach einem der vorhergehenden Ansprüche, mit einer Einrichtung zum Verarbeiten von monoskopischen Bildsignalen, die als Bild auf einem Bildschirm darstellbar sind, und Mitteln zum zumindest wahlweisen Herstellen des Bildes in Form zweier um einen gewählten Teilbildabstand nebeneinander versetzter Teilbilder, die komplementäre Farbauszüge des monoskopischen Bildes darstellen, dadurch gekennzeichnet, dass in einer an sich bekannten Schaltung, in welcher ein Satz von drei Grundfarben-Signalwegen für je ein Grundfarbensignal vorhanden ist, in einem ersten Teilsatz der Signalwege Verzögerungsmittel vorgesehen sind, die das über den Signalweg geführte Grundfarbensignal um den Teilbildabstand zeitlich verzögern.

9. Vorrichtung nach Anspruch 8, gekennzeichnet durch Abschaltmittel zum wahlweisen Unwirksammachen der Verzögerungsmittel, wobei vorzugsweise zum Vermeiden von die Betrachtung störenden Unterschieden zwischen Betrieb mit und ohne Überlagerung von Teilbildern die Abschaltmittel mit Mitteln zum Verändern der Bildhelligkeit und/oder der Farbsättigung und/oder des Kontrastes gekoppelt sind.

10. Vorrichtung nach Anspruch 8 oder 9, gekennzeichnet durch Mittel, durch die die Intensitäten der Grundfarbensignale relativ zueinander verstellt werden, um eine möglichst vollständige Komplementarität zu erzielen, auch einschliesslich der Anaglyphenbrille.

**Claims**

1. A method for producing a stereoscopic effect of the picture reproduced on the screen of a television receiver when viewed through anaglyphic eye glasses, from monoscopic image signals representing monoscopic images in timed sequence, by superimposing two partial images which are mutually offset by a selected partial image distance, in complementary colours matched with the anaglyphic eye glasses, each of the partial images being respectively derived in the form of a colour exert from the same monoscopic image, characterized in that the partial image distance is created by mutually time-delaying the partial image signals which produce the associated partial images.

2. A method according to claim 1, characterized in that to produce the screen image a three beam colour picture tube operated in the usual manner is employed, which is controlled by a set of basic colour signals contained in the image signal, and in that for forming the partial image signals the set of the three basic colour signals is subdivided into two partial sets of basic colour signals, which are mutually time-delayed in correspondence with the selected partial image distance.

3. A method according to claim 2, characterized in that the set of basic colour signals is subdivided, and correspondingly designed anaglyphic eye glasses are employed, such that the partial images when being viewed combine to form an image in substantially the original colours the subdivision of the set of basic colour signals being effected in correspondence with anaglyphic eye glasses in which the spectral regions the two filter discs of the glasses allow to pass overlap possibly little and together possibly comprise the entire visible spectrum.

4. A method according to claim 2 or 3, characterized in that a first partial set is formed in the form of one of the basic colour signals, and a second partial set is formed in the form of the two other basic colour signals.

5. A method according to claim 4, characterized in that one of the partial sets is left undelayed.

6. A method according to any one of the claims 2 to 5, characterized in that to obtain complementarity as complete as possible the intensities of the basic colour signals are relatively adjusted with respect to each other.

7. A method according to any one of the preceding claims, characterized in that the image screen is fixed on a carrier.

8. An apparatus for performing the method according to any one of the preceding claims, comprising means for processing monoscopic image signals which can be displayed as an image on an image screen, and means for at least selectively producing the image in the form of two partial images representing complementary colour excerpts of the monoscopic image and being offset laterally by a selected distance, characterized in that in a known-per-se circuit in which is provided a set of three basic colour signal paths, delaying means are provided in a first partial set of the signal paths to time-delay by the partial image distance the basic colour signal conducted through the signal path.

9. An apparatus according to claim 8, characterized by switch-off means for selectively making the delaying means ineffective, the switch-off means being preferably provided with means for varying the image brightness, and/or the colour saturation and/or the contrast in order to avoid differences between operation with and without superposition of partial images which would disturb the viewing.

10. An apparatus according to claim 8 or 9, characterized by means for relatively adjusting the basic colour signals with respect to each other to obtain complementarity as complete as possible, also including the anaglyphic eye glasses.

**Revendications**

1. Procédé pour la production d'une impression stéréoscopique d'image sur l'écran d'un récepteur de télévision si regardée avec des lunettes type anaglyphe, de signaux d'image monoscopiques représentant des images monoscopiques temporellement suivant l'une l'autre, par superposition des deux images partielles qui sont décalées l'une de l'autre par une distance partielle choisie en des couleurs complémentaires cadrant avec les lunettes type anaglyphe, chacune des images partielles étant dérivée sous forme d'une image de couleur séparée respectivement de la même image monoscopic, caractérisé en ce que la distance de l'image partielle est formée par retardation temporelle l'un vis-à-vis l'autre des signaux d'image partielle produisant les images partielles appartenant l'une à l'autre.

2. Procédé selon revendication 1, caractérisé en ce que pour la production de l'image d'écran un tube de couleur type trois-rayons est utilisé dans la manière usuelle, commandé avec un jeu de signaux de couleurs fondamentales contenus dans le signal d'image, et en ce que pour la formation des signaux d'images partielles le jeu des trois signaux de couleurs fondamentales est divisé en deux jeux partiels de signaux de couleurs fondamentales retardés temporellement l'un par rapport à l'autre correspondamment à la distance choisie d'image partielle.

3. Procédé selon revendication 2, caractérisé en ce que le jeu de signaux de couleurs fondamentales est divisé dans une manière telle que, et que des lunettes type anaglyphe sont utilisées correspondamment dessinées dans une manière telle que les images partielles se composent sensiblement dans les couleurs originales pour former une image en regardant, la division du jeu des signaux de couleurs fondamentales étant effectuée dans une manière à cadrant avec des lunettes type anaglyphe, chez lesquelles les zones spectrales de lumière laissées passer par les deux disques de filtre des lunettes se recouvrent le moins possible et comprennent ensemble le mieux possible tout le spectre visible.

4. Procédé selon revendications 2 ou 3, caractérisé en ce que un premier jeu partiel est formé sous forme de l'un des signaux de couleurs fondamentales et un second jeu partiel est formé sous forme de ces deux autres signaux de couleurs fondamentales.

5. Procédé selon revendication 4, caractérisé en ce que l'un des jeux partiels est laissé sans retardation.

6. Procédé selon l'une des revendications 2 à 4, caractérisé en ce que pour obtenir la complémentairité le mieux complète possible les intensités des signaux de couleurs fondamentales sont décalés l'un par rapport à l'autre.

7. Procédé selon l'une des revendications précédentes, caractérisé en ce que l'image sur l'écran est fixée sur un porteur.

8. Dispositif pour conduire le procédé selon l'une des revendications précédentes, comportant un dispositif pour procéder des signaux d'image monoscopiques capables d'être représentés comme image sur un écran, et des moyens pour représenter l'image au moins sélectivement sous forme de deux images partielles côte à côte décalées l'une par rapport à l'autre par une distance choisie partielle et qui représentent des images de couleurs séparées complémentaires de l'image monoscopique, caractérisé en ce que dans un dispositif de commande connu en soi, dans lequel est disponible un jeu de trois pistes de signaux de couleur fondamentales pour chaque signal de couleur fondamentale, il est prévu des moyens de retardation dans un premier jeu partiel des pistes de signaux, qui retardent temporellement le signal de couleur fondamentale passé à travers la piste de signal par la distance de l'image partielle.

9. Dispositif selon revendication 8, caractérisé par des moyens de couper le courant pour sélectivement rendre ineffectifs les moyens de retardation, les moyens de couper étant de préférence couplés avec des moyens pour changer la clarté de l'image et/ou la saturation en couleur et/ou le contraste pour éviter des différences entre opération avec et sans superposition des images partielles, qui dérangent le regard.

10. Dispositif selon revendication 8 ou 9, caractérisé par des moyens par lesquels les intensités des signaux de couleurs fondamentales sont ajustées l'une par rapport à l'autre pour obtenir une complémentarité le mieux complète possible, même comprenant les lunettes type anaglyphe.

Fig. 1

Fig.2